# EUROPEAN PATENT APPLICATION

(11) **EP 1 323 693 A1**
(43) Date of publication of application: **02.07.2003**
(21) Application number: 01957047.2
(22) Date of filing: 03.07.2001
(51) Int. Cl.: C05G 1/00

(54) **NITROGEN-POTASSIUM FERTILISER**

(30) Priority: 11.08.2000 RU 2000120937
(71) Applicant: Serebryakov, Alexandr Ivanovich, Moskovskaya obl. 143031 (RU); Dukhanin, Vladimir Fedorovich, Nevinnomyssk, 357030 (RU)
(72) Inventor: Serebryakov, Alexandr Ivanovich, Moskovskaya obl. 143031 (RU); Dukhanin, Vladimir Fedorovich, Nevinnomyssk, 357030 (RU)
(74) Representative: Kador & Partner
(86) International application number: RU0100265
(87) International publication number: WO02014239

(57) **Abstract**

The invention relates to the production of nitrogen-potassium fertilizers and can be used for the chemical industry and for agriculture. The inventive liquid nitrogen-potassium fertilizer comprises carbamide, potassium chloride, an ammoniated component and water. Ammonium nitrate is used as the ammoniated component with the following mixingratio of ingredients in: 20-34 mass % carbamide, 5-25 mass % potassium chloride, 25-42 mass % ammonium nitrate, the rest being water. Said liquid nitrogen-potassium fertilizer also comprises 0.3-3 mass % magnesium sulphate or 1.5-3 mass % clay.

## Description

### Field of art

The invention relates to the production of nitrogen-potassium fertilizers and can be used for the chemical industry and for agriculture.

### State of art

There is a known liquid nitrogen-potassium fertilizer comprising an aqueous solution of carbamide CO(NH₂)₂ and potassium nitrite KNO₂, which is obtained by adding carbamide to 10-70 % KNO₂ solution in the amount of 2-60 % by total weight of the solution (SU 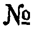 214551, Int. cl. C05D 1/00, 1968). The disadvantage of this fertilizer is that it comprises nitrogen in form of nitrite (N₂O₃) and amide (NH₂) only, whereas most of the plants need the fertilizers comprising nitrogen in form of nitrate (NO₃) and ammonium (NH₄).

There is a known liquid nitrogen-potassium fertilizer, which comprises potassium sulfite K₂SO₃ and potassium nitrite KNO₂ aqueous solution with concentrations of 5-52 mass % and 2-60 mass %, respectively (SU 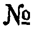 451677, Int. cl. C05D 1/00, C05C 11/00, 1974). The disadvantage of this fertilizer is that it comprises nitrogen in form of nitrite (N₂O₃) only.

The closest to the fertilizer of this invention in composition of nutrients is a liquid nitrogen-potassium fertilizer, which comprises carbamide CO(NH₂)₂ aqueous solution, potassium chloride KCl and ammonium hydroxide NH₄OH - the ammoniated component with concentrations of 15-42 mass % , 1-7 mass % 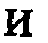 0.25-2 mass %, respectively. Water concentration lies within the range of 30-55 mass % (US A1 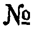 3918952, 1975). The disadvantage of this fertilizer is that it comprises relatively small mass of nutrients, nitrogen and potassium, due to using large amount of water. In this fertilizer nitrogen is present in form of ammonium (NH₄) and amide (NH₂) but it is not present in form of nitrite (N₂O₃) and nitrate (NO₃). The study carried out by the authors has shown that this fertilizer has a freezing temperature between- (14÷26)°C for the range of water content of 50-30 mass %, respectively, which makes it impossible to store the fertilizer under autumn and winter conditions in most of the regions of Russia.

### Disclosure of the invention

The technical task to be solved by this invention is increasing the number of nitrogen forms and the mass of nutrients in the fertilizer and reducing its freezing temperature.

The set task is solved by using in the liquid nitrogen-potassium fertilizer comprising carbamide, potassium chloride, an ammoniated component and water, ammonium nitrate as the ammoniated component with the following mixing ratio of ingredients in: 20-34 mass % carbamide, 5-25 mass % potassium chloride, 25-42 mass % ammonium nitrate, the rest being water. Said nitrogen-potassium fertilizer also comprises 0.3-3 mass % magnesium sulphate or 1.5-3 mass % clay.

The main distinctive features characterizing the fertilizer lie in the fact that ammonium nitrate is used as the ammoniated component with the following mixing ratio of ingredients in: 20-34 mass % carbamide, 5-25 mass % potassium chloride, 25-42 mass % ammonium nitrate, the rest being water.

Additional distinctive features lie in the fact that the fertilizer comprises 0.3-3.0 mass % magnesium sulphate or 1.5-3 mass % clay. The said fertilizer comprises nitrogen in three forms: in form of amide (NH₂), in form of ammonium (NH₄) and in form of nitrate (NO₃).

This invention conforms to the condition for patentability as to novelty since in the prior art there has not been found an engineering solution whose essential features are in full coincidence with all features contained in an independent claim of the invention. The invention also conforms to the condition for patentability as to an inventive level sincethe prior art does not contain a description of the engineering solution whose distinctive features are aimed at solution of the technical task aimed at by this invention.

### The embodiment of the invention

An essence of the invention is explained by terms of the following examples.

### Example 1.

Crystalline carbamide CO(NH₂)₂ and potassium chloride KCl are gradually added to 25 % solution of ammonium nitrate NH₄NO₃. The obtained solution is heated up and stirred.

The resulting solution comprises 20 mass % CO(NH₂)₂, 25 mass % KCI, 25 mass % NH₄NO₃, 30 mass % water H₂O. The freezing temperature of this solution is -27.5°C, content of nutrients is as follows: 15 mass % potassium in terms of K₂O; 9.2 mass % nitrogen in form of amide NH₂; 8.5 mass % nitrogen in form of ammonium NH₄⁺ and in form of nitrate NO₃⁻. The total content of nutrients is 32.7 mass %.

A comparison between the composition of the inventive fertilizer and that of its prototype (its lower limit) comprising 15 mass % carbamide, 7 mass % potassium chloride, 2 mass % ammonium hydroxide NH₄OH shows that the fertilizer of this invention has a higher content of nutrients, 32.7 mass % versus 11.9 mass % nutrients of the prototype fertilizer. Furthermore the prototype fertilizer does not contain nitrogen in nitrate form, and its freezing temperature is 13.5°C higher than that of the inventive fertilizer.

### Example 2.

Powdered potassium chloride and ammonium nitrate are added to 34 % carbamide solution. The obtained solution is stirred at a room temperature. The resulting solution comprises 34 mass % carbamide, 5 mass % potassium chloride, 42 mass % ammonium nitrate, 19 mass % water. The freezing temperature of this solution is - 28°C, content of nutrients is as follows: 15.6 mass % nitrogen in form of amide; 14.3 mass % nitrogen in form of ammonium and in form of nitrate; 3 mass % potassium in terms of K₂O. The total content of nutrients is 32.9 mass %.

A comparison between the composition of the inventive fertilizer and that of its prototype (its upper limit) comprising 42 mass % carbamide, 7 mass % potassium chloride, 2 mass % ammonium hydroxide shows that the inventive fertilizer has a higher content of nutrients, 32.9 mass % versus 24.3 mass % of the prototype fertilizer. Furthermore, the prototype fertilizer does not contain nitrogen in form of nitrate, and its freezing temperature is 2°C higher than that of the inventive fertilizer.

### Example 3.

Powdered potassium chloride and ammonium nitrate are added to 27 % carbamide solution. The obtained solution is stirred at a temperature of 50°C. The resulting solution comprises 27 mass % carbamide, 15 mass % potassium chloride, 33 mass % ammonium nitrate, 25 mass % water. The freezing temperature of this solution is -30°C, content of nutrients is as follows: 12.42 mass % nitrogen in form of amide; 11.22 mass % nitrogen in form of ammonium and nitrate; 9 mass % potassium in terms of K₂O. The total content of nutrients is 32.64 mass %.

A comparison between the composition of the inventive fertilizer and that of its prototype (its upper limit) comprising 42 mass % carbamide, 7 mass % potassium chloride, 2 mass % ammonium hydroxide NH₄OH shows that the inventive fertilizer has a higher content of nutrients, 32.64 mass % versus 24.3 mass % of the prototype fertilizer. Furthermore, the prototype fertilizer does not comprise nitrogen in form of nitrate and comprises rather small amount of nitrogen in form of ammonium (0.8 mass % ammonia nitrogen in form of N-NH₄⁺ in 2 mass % nitrogen hydroxide NH₄OH), and its freezing temperature is 4°C higher than that of the inventive fertilizer.

### Example 4.

Crystalline carbamide CO(NH₂) and potassium chloride KCl are gradually added to 25 % solution of ammonium nitrate NH₄NO₃. The obtained solution is heated up and stirred, while adding magnesium sulphate and clay.

The resulting solution comprises 20 mass % CO(NH₂)₂, 25 mass % KCl, 25 mass % NH₄NO₃, 3 mass % MgSO₄, 1.5 mass % clay, 25.5 mass % water H₂O. The freezing temperature of this solution is-28,5°C, the content of nutrients is same as in Example 1 and makes up in total 32.7 mass %.

A comparison between the composition of the inventive fertilizer and that of the prototype fertilizer (its lower limit) comprising 15 mass % carbamide, 7 mass % potassium chloride, 2 mass % ammonium hydroxide NH₄OH shows that the fertilizer of this invention has a higher content of nutrients, 32.7 mass % versus 11.9 mass % in the prototype fertilizer. Furthermore, the prototype fertilizer does not contain nitrogen in form of nitrate, and its freezing temperature is 14.5°C higher than that of the inventive fertilizer.

### Example 5.

Powdered potassium chloride and ammonium nitrate are added to 34 % carbamide solution. The obtained solution is stirred at a room temperature, while adding magnesium sulphate and clay. The resulting solution comprises 34 mass % carbamide, 5 mass % potassium chloride, 42 mass % ammonium nitrate, 0.3 mass % magnesium sulphate, 3 mass % clay and 15.7 mass % water. The freezing temperature of this solution is-29°C, the content of nutrients is as follows: 15.6 mass % nitrogen in form of amide; 14.3 mass % nitrogen in form of ammonium and nitrate; 3 mass % potassium in terms of K₂O. The total content of nutrients is 32.9 mass %.

A comparison between the composition of the inventive fertilizer and that of the prototype fertilizer (its upper limit) comprising 42 mass % carbamide, 7 mass % potassium chloride, 2 mass % ammonium hydroxide (NH₄OH) shows that the fertilizer of this invention has a higher content of nutrients, 32.9 mass % versus 24.3 mass % of the prototype fertilizer. Furthermore, the prototype fertilizer does not contain nitrogen in form of nitrate, and its freezing temperature is 3°C higher than that of the inventive fertilizer.

### Industrial applicability

The liquid nitrogen-potassium fertilizer of this invention is a stable balanced system which features valuable agrochemical properties due to a high content of potassium and nitrogen, being present in form of amide, ammonium and nitrate, with the total content of nutrients from 32.64 to 32.9 mass % and the freezing temperature from - (27.5 to 30)°C. This permits to store the fertilizer under autumn-winter conditions in most regions of Russia and to expand the field of its application- the fertilizer can be used for top dressing by spraying it on the leaves.

## Claims

1. A liquid nitrogen-potassium fertilizer comprising carbamide, potassium chloride, ammoniated component and water, differing in that ammonium nitrate is used as the ammoniated component with the following mixing ratio of ingredients in: 20-34 mass % carbamide, 5-25 mass % potassium chloride, 25-42 mass % ammonium nitrate, the rest being water.

2. The liquid nitrogen-potassium fertilizer as claimed in claim 1, differing in that it also comprises 0.3-3 mass % magnesium sulphate.

3. The liquid nitrogen-potassium fertilizer as claimed in claim 1 differing in that it also comprises 1.5-3 mass % clay.
